# EUROPÄISCHE PATENTSCHRIFT

(11) **EP 2 440 594 B1**
(45) Veröffentlichungstag und Bekanntmachung des Hinweises auf die Patenterteilung: **24.07.2013**
(21) Anmeldenummer: 10719334.4
(22) Anmeldetag: 10.05.2010
(51) Int. Cl.: C08G 18/10, C08G 18/12, C08G 18/71, C09J 175/04, C09J 175/12

(54) **SILAN-VERNETZENDER 1-KOMPONENTEN KASCHIERKLEBSTOFF**
SILANE CROSS-LINKED 1-COMPONENT LAMINATION ADHESIVE
COLLE DE CONTRECOLLAGE MONOCOMPOSANT À RÉTICULATION SILANE

(30) Priorität: 10.06.2009 DE 102009026900
(43) Veröffentlichungstag der Anmeldung: 18.04.2012
(73) Patentinhaber: Henkel AG & Co. KGaA, 40589 Düsseldorf (DE)
(72) Erfinder: GENTSCHEV, Pavel, 4823 Bad Goisern (AT); KINZELMANN, Hans-Georg, 50259 Pulheim (DE); STRÜMPF, Svenja, 42657 Solingen (DE)
(86) Internationale Anmeldenummer: PCT/EP2010/056311
(87) Internationale Veröffentlichungsnummer: WO 2010/142501

(56) Entgegenhaltungen:
- EP-A1- 1 674 546
- EP-A1- 1 995 261
- DE-A1- 10 237 271

## Beschreibung

Die Erfindung betrifft einen Klebstoff auf Basis von Polyurethanen zum Verkleben von flächigen Substraten, der über hydrolisierbare Silangruppen vernetzten kann. Die Erfindung betrifft weiter die Verwendung dieses Klebstoffs als Kaschierklebstoff für Mehrschichtfolien.

Transparente NCO-vernetzende 1-Komponenten-Klebstoffe als Umsetzungsprodukt aus Polyolen und Isocyanaten sind in der EP 0464483 bekannt. Dort werden Isocyanate eingesetzt, die Harnstoffgruppen aufweisen. Solche Harnstoffgruppen geben eine hohe Wasserstoffbrückenbindung und damit meist eine hohe Viskosität des Polymeren. Außerdem führen monomere Isocyanate bei der Polymerherstellung zu einem Restmonomergehalt an gesundheitsschädlichen Isocyanaten, der durch zusätzliche Maßnahmen vermindert werden muss.

Weiterhin ist die US 5990257 bekannt. Diese beschreibt ein verfahren zu Herstellung von Silylgruppen aufweisenden Polyurethanen, wobei Isocyanate im Unterschuss eingesetzt werden zu Polyolen. Weitere OH-Gruppen werden dann mit Isocyanatosilanen zu Silylgruppen haltigen Prepolymeren umgesetzt.
Die Polymere weisen ein Molekulargewicht von mehr als 12000 g/mol auf. Die Viskosität liegt oberhalb von 57 Pa.s. Als Anwendung ist eine Verwendung als Dichtungsmasse beschrieben, die nach Härtung eine niedrige Haftung aufweisen soll.

Aus der DE 10237271 sind Polymermassen bekannt, die Alkoxysilan-terminierte Polymere enthalten. Diese sollen eine lange Hautbildungszeit aufweisen. Als Vorteil wird die Beschleunigung der Reaktion durch erhebliche Mengen an Katalysatoren gefordert, wobei die gebildete Haut nicht an einer Metalloberfläche haften soll. Es werden gesundheitlich bedenkliche Zinnverbindungen als Katalysator beschrieben. Es werden in dieser Anmeldung also keine als Kaschierklebstoff geeigneten Materialien beschrieben.

Weiterhin ist die EP 1674546 bekannt. In dieser werden feuchtigkeitshärtende Zusammensetzungen beschrieben, die aus NCO-Gruppen-haltigen Polyurethanen erhalten werden, die mit nucleophil substituierten Silanen umgesetzt werden. Es wird die schnelle Reaktion dieser Klebstoffe mit Feuchtigkeit beschrieben. Die Klebstoffe werden als Schmelzklebstoffe eingesetzt, d.h. sie liegen bei Raumtemperatur als Feststoff vor und sind nur in der Wärme aufzutragen.

Das Dokument EP 1 995 261 A1 offenbart Alkoxysilangruppen aufweisende Prepolymere auf Basis von niedrigviskosen Polyesterpolyolen, ein Verfahren zu ihrer Herstellung und ihre Anwendung als Bindemittel für Klebstoffe, Primer oder Beschichtungen. Im Beispiel 1 von EP 1 995 261 A1 wird die Herstellung des Klebstoffs beschrieben: In einem Becher mit Deckel, Rührer, Thermometer und Stickstoffdurchfluss werden zu 2197 g des Polyesterdiols A (Molekulargewicht 1130 g/mol) 0,6 g Dibutylzinndilaurat (Desmorapid Z, Bayer MaterialScience AG, Leverkusen, DE) gegeben, und die Mischung wird auf 60°C erwärmt. Anschließend werden über drei Stunden 814 g Isocyanatopropyltrimethoxysilan (Genlosil GF40, Wacker AG, Burghausen) zugetropft und nachgerührt, bis titrimetrisch kein NCO-Gehalt mehr nachzuweisen ist. Das erhaltene Alkoxysilyl-Endgruppen aufweisende Polyurethanprepolymer hat eine Viskosität von 6450 mPas bei 23°C. Es wird allerdings kein organisches Lösemittel verwendet. Außerdem wird die Glasübergangstemperatur des vernetzten Klebstoffs nicht offenbart.

Das Dokument EP 1 674 546 A1 offenbart Alkoxysilangruppen aufweisende Prepolymere auf Basis von Polyesterpolyolen. Im Beispiel 1 von EP 1 674 546 A1 wird die Herstellung des Klebstoffs beschrieben: In einem Becher werden zu 790,34 g des Polyesterdiols A (Molekulargewicht 3740 g/mol) 109,5 g 4,4'-MDI gegeben. Anschließend werden 148,46 g N-(3-trimethoxysilylpropyl)asparaginsäure-diethylester zugetropft und nachgerührt, bis titrimetrisch kein NCO-Gehalt mehr nachzuweisen ist. Es wird allerdings kein organisches Lösemittel verwendet. Außerdem wird die Glasübergangstemperatur des vernetzten Klebstoffs nicht offenbart.

Das Dokument DE 102 37 271 A1 offenbart Alkoxysilangruppen aufweisende Prepolymere auf Basis von Polyolen. Im Beispiel 3 von DE 102 37 271 A1 wird die Herstellung eines Prepolymers beschrieben: Polypropylenglykol wird mit Isocyanatomethyl-trimethoxysilan versetzt. Das erhaltene Alkoxysilyl-Endgruppen aufweisende Polyurethanprepolymer hat eine Viskosität von 8500 mPas ohne Angabe der Messtemperatur. Es wird allerdings kein organisches Lösemittel verwendet. Außerdem wird die Glasübergangstemperatur des vernetzten Klebstoffs nicht offenbart.

Die Zusammensetzungen des Stands der Technik haben verschiedene Nachteile. Isocyanat-haltige Klebstoffe sind im Arbeitschutz nicht unbedenklich. Außerdem ist eine Lagerung nur unter streng wasserfreien Bedingungen möglich. Andere Kaschierklebstoffe weisen häufig eine schlechte Anfangshaftung zu verschiedenen Substraten auf. Ein weiterer Nachteil ist die Sprödigkeit solcher Klebstoffe, die dann für flexible Verpackungen weniger geeignet sind. Schmelzklebstoffe benötigen eine hohe Auftragstemperatur, dabei können die Substratfolien geschädigt werden.

Aufgabe der vorliegenden Erfindung ist es deswegen einen bei Raumtemperatur niedrigviskosen Klebstoff zur Verfügung zu stellen, der in dünner Schicht auf große Substratflächen aufgetragen werden kann. Es soll eine gute Haftung zu den Substraten aufweisen und einen schnellen Haftungsaufbau. Nach Vernetzung soll die Klebstoffschicht möglichst keine physiologisch bedenklichen Inhaltsstoffe aufweisen, beispielsweise keine primären aromatischen Amine. Weiterhin soll der Klebstoff lagerstabil auch in Gegenwart von Feuchtigkeit sein.

Die Erfindung wird gelöst durch einen vernetzbaren 1-Komponenten-Kaschierklebstoff enthaltend 25 bis 80 Gew- % Polyesterprepolymere, Polyetherprepolymere und /oder Polyurethanprepolymere, die mindestens zwei vernetzbare Silangruppe aufweisen, 75 bis 20 Gew-% organische Lösemittel mit einem Siedepunkt bis 130°C, 0 bis 15 Gew.- % von Additiven, wobei das Prepolymer ein Molekulargewicht von 2000 bis 30000 g/mol besitzt, wobei die Viskosität des Klebstoffs zwischen 50 bis 20000 mPas (nach DIN ISO 2555) beträgt, gemessen bei 15 bis 45°C, und wobei der vernetzte Klebstoff ein Glasübergangstemperatur von -15 bis 30°C aufweist.

Geeignete Polyester für die Herstellung erfindungsgemäßer Prepolymere sind die bekannten Polyesterpolyole, beispielsweise in Form von Polyesterpolyolen oder Polyurethanpolyolen, die an mindestens zwei Stellen mit Silanverbindungen umgesetzt werden, die eine mit dem Polymerrückgrat reaktive Gruppe und zusätzlich mindestens eine vernetzbare Silangruppen enthalten. Insbesondere sollen die Polyesterpolyole größer/gleich zwei OH-Gruppen aufweisen.

Geeignete Polyesterpolyole sind beispielsweise durch Polykondensation herstellbar. So können difunktionelle und/oder trifunktionelle niedermolekulare Alkohole mit einem Unterschuss an Dicarbonsäuren und/oder Tricarbonsäuren kondensiert werden. Anstatt freier Polycarbonsäuren können auch die entsprechenden Polycarbonsäureanhydride oder entsprechende Polycarbonsäureester mit Alkoholen mit vorzugsweise 1 bis 3 C-Atomen eingesetzt werden. Geeignete Dicarbonsäuren sind beispielsweise Bernsteinsäure, Adipinsäure, Korksäure, Azelainsäure, Sebacinsäure und ihre höhere Homologen mit bis zu 16 C-Atomen, ferner ungesättigte Dicarbonsäuren wie Maleinsäure oder Fumarsäure, Dimerfettsäure oder Trimerfettsäure oder aromatische Dicarbonsäuren, insbesondere die isomeren Phthalsäuren, wie Phthalsäure, Isophthalsäure oder Terephthalsäure, Anhydride wie beispielsweise Tetrahydrophthalsäureanhydrid, Hexahydrophthalsäure-anhydrid, Glutarsäureanhydrid, Maleinsäureanhydrid, oder Gemische aus zwei oder mehr solche Säuren. Als gegebenenfalls anteilsweise zusetzbare Tricarbonsäuren sind beispielsweise Zitronensäure oder Trimellithsäure geeignet. Die Mengen werden so gewählt, dass endständig OH-funktionelle Polyesterdiole erhalten werden. In einer bevorzugten Ausführungsform sind Gemische aus aliphatischen und aromatischen Carbonsäuren enthalten.
Zur Herstellung derartiger Polyesterpolyole geeignet sind insbesondere aliphatische Alkohole. Zu den geeigneten aliphatischen Alkoholen zählen beispielsweise Ethylenglykol, Propylenglykol, Butandiol-1,4, Pentandiol-1,5, Hexandiol-1,6, Heptandiol-1,7, Octandiol-1,8 und deren höhere Homologen oder Isomeren, 1,4-Hydroxymethyl-cyclohexan, 2-Methyl-1,3-propandiol, Triethylenglykol, Ethylenglykol, Polyethylenglykol, Dipropylenglykol, Polypropylenglykol, Dibutylenglykol und Polybutylenglykol

Ebenfalls geeignet sind höherfunktionelle Alkohole wie beispielsweise Glycerin, Trimethylolpropan, Pentaerythrit, Neopentylglycol sowie oligomere Ether der genannten Substanzen mit sich selbst oder im Gemisch aus zwei oder mehr der genannten Ether untereinander.

Geeignete Polyole zur Herstellung der Polyester sind auch Umsetzungsprodukte niedermolekularer polyfunktioneller Alkohole mit Alkylenoxiden, sogenannte Polyether. Die Alkylenoxide weisen vorzugsweise 2 bis 4 C-Atome auf. Geeignet sind beispielsweise die Umsetzungsprodukte von Ethylenglykol, Propylenglykol, den isomeren Butandiolen, Hexandiolen oder 4,4'-Dihydroxy-diphenylpropan mit Ethylenoxid, Propylenoxid oder Butylenoxid, oder Gemischen aus zwei oder mehr davon. Ferner sind auch die Umsetzungsprodukte polyfunktioneller Alkohole, wie Glycerin, Trimethylolethan oder Trimethylolpropan, Pentaerythrit oder Zuckeralkohole, oder Gemischen aus zwei oder mehr davon, mit den genannten Alkylenoxiden zu Polyetherpolyolen geeignet. Diese sollen ein Molekulargewicht von etwa 400 bis etwa 2000 g/mol aufweisen.

Ebenfalls geeignet sind Polyesterpolyole, die durch Umsetzung von niedermolekularen Alkoholen, insbesondere von Ethylenglykol, Diethylenglycol, Neopentylglycol, Hexandiol, Butandiol, Propylenglykol, Glycerin oder Trimethylolpropan mit Lactonen, insbesondere Caprolacton, entstehen. Dabei sind auch 1,4-Hydroxymethylcyclohexan, 2-Methyl-1,3-propandiol, Butantriol-1,2,4, Triethylenglykol, Tetraethylenglykol, Polyethylenglykol, Dipropylenglykol, Polypropylenglykol, Dibutylenglykol und Polybutylenglykol als Alkohole geeignet.
Es können aber auch Polyesterpolyole oleochemischer Herkunft verwendet werden. Unter oleochemischen Polyolen versteht man Polyole auf Basis natürlicher Öle und Fette, z.B. die Reaktionsprodukte von epoxidierten Fettstoffen mit mono-, di- oder polyfunktionellen Alkoholen oder Glycerinester langkettiger Fettsäuren, die zumindest teilweise mit Hydroxylgruppen substituiert sind. Derartige Polyesterpolyole können beispielsweise durch vollständige Ringöffnung von epoxidierten Triglyceriden eines wenigstens teilweise olefinisch ungesättigte Fettsäureenthaltenden Fettgemisches mit einem oder mehreren Alkoholen mit 1 bis 12 C-Atomen und anschließender partieller Umesterung der Triglycerid-Derivate zu Alkylesterpolyolen mit 1 bis 12 C-Atomen im Alkylrest hergestellt werden. Weitere geeignete Polyole sind Polycarbonat-Polyole und Dimerdiole (Fa. Henkel) sowie Rizinusöl und dessen Derivate.

Verfahren zur Herstellung solcher OH-funktioneller Polyester sind bekannt. Auch sind solche Polyesterpolyole kommerziell erhältlich.

Eine andere Klasse von geeigneten Polyolen als Polymerrückgrat sind Polyetherpolyole. Als Polyetherpolyole sind die bekannten Umsetzungsprodukte aus Diolen oder Triolen geeignet, wie Ethylenglykol, Propylenglykol-1,2 oder -1,3, Butylenglykol-1,4 oder -1,3, Hexandiol-1,6, Octandiol-1,8, Neopentylglykol, 1,4-Hydroxymethylcyclohexan, 2-Methyl-1,3-propandiol, Glycerin, Trimethylolpropan, Hexantriol-1,2,6, mit Alkylenoxiden, wie beispielsweise Propylenoxid, Butylenoxid. Diese Polyole können zwei oder drei OH-Gruppen aufweisen. Solche Polyole sind kommerziell erhältlich.

Das Molekuargewicht der Polyole soll etwa von 400 bis 30000 g/mol betragen (zahlenmittleres Molekulargewicht, M_{N}, wie über GPC bestimmbar), bei Polyesterpolyolen oder Polyurethanpolyolen insbesondere von 2000 bis 20000 g/mol, bei Polyetherpolyolen insbesondere von 400 bis 10000 g/mol. Bevorzugt sollen mindestens 50 % der Prepolymere auf Basis von Polyesterpolyolen eingesetzt werden, insbesondere ausschließlich aus Polyesterpolyolen, besonders bevorzugt aus Polyesterdiole mit endständigen OH-Gruppen.

In einer Ausführungsform können aus den oben beschriebenen Polyester- und /oder Polyetherpolyolen durch Umsetzung mit einem Überschuss an Diisocyanaten NCO-gruppenhaltigen Prepolymere hergestellt werden. Dabei werden die Polyole in flüssiger oder aufgeschmolzener Form, ggf. auch Lösemittel enthaltend, mit Diisocyanaten umgesetzt. Das kann auch durch erhöhter Temperatur unterstützt werden, ebenso ist es bekannt, dass geringe Mengen an Katalysatoren zugesetzt werden können. Durch die Auswahl der Isocyanate und die Menge kann sichergestellt werden, dass nur geringe Anteile an freien nicht umgesetzten Diisocyanaten in der Reaktionsmischung vorhanden sind. Gegebenenfalls ist es auch möglich, überschüssige monomere Isocyanate durch Destillation abzutrennen. Solche Verfahren sind dem Fachmann bekannt. Dabei kann der Polyester nur endständige NCO-Gruppen enthalten, oder es bilden sich durch Molekuargewichtsaufbau Polyurethanprepolymere mit reaktiven NCO-Gruppen. Diese Polyurethanprepolymere sind auch zur Synthese der erfindungsemäß einzusetzenden Silan-haltigen Prepolymere geeignet.

Als Isocyanate sind insbesondere die bekannten aliphatischen oder aromatischen Diisocyante geeignet, wie 1,6-Hexamethylendiisocyanat (HDI), 1-Isocyanato-3,3,5-trimethyl-5-isocyanatomethylcyclohexan (IPDI), Xylylendi-isocyanat (XDI), Tetramethylxylylendiisocyanat (TMXDI), 2,4- oder 2,6-Toluylendiisocyanat (TDI), 2,4'-Diphenylmethandiisocyanat, 2,2'-Diphenylmethandiisocyanat oder 4,4'-Diphenylmethandiisocyanat (MDI) sowie deren Isomerengemische, Cyclohexyldiisocyanat (CHDI), Hexahydroxylylendiisocyanat (HXDI), m-Xylylendiisocyanat (XDI), Naphthalindiisocyanat (NDI) oder Bitoluylendiisocyanat (TODI). Die Menge wird so gewählt, dass ein NCO-terminiertes Prepolymer erhalten wird.

In einer Ausführungsform der Erfindung werden diese NCO-Gruppen haltigen Umsetzungsprodukte anschließend mit Silanen umgesetzt, die zusätzlich zu einer nucleophilen Gruppe hydrolisierbare Silangruppen enthalten.

Als geeignete Silane werden organofunktionelle Silane wie hydroxyfunktionelle, mercaptofunktionelle oder aminofunktionelle Silane der allgemeinen Formel

Nu-(Alkyl- Si (R²)ₐ F_{b} )_{c} ,

mit Nu = NH, NH₂, SH, OH
Alkyl = C₁, C₂, C₃ , C₄, C₆, linear oder verzweigt oder cycloalkyl
R² = Methyl, Ethyl, Propyl, Butyl,
a = 0,1, 2
F = -Cl, -O-C(=O)R¹, -O R¹, -OH,
b =1,2,3,
R¹ = Kohlenwasserstoffrest mit 1 bis 20 C-Atomen
c =1,2
eingesetzt. Die Silangruppe sollen mindestens eine bevorzugt zwei oder drei hydrolysierbare Reste enthalten. Insbesondere sind C₁ bis C₆ -Alkohole oder C₂ und C₃ -Carbonsäuren oder OH-Gruppen geeignet. Diese Reste können entweder ausschließlich oder gemischt am Siliziumatom enthalten sein. Es können zusätzlich 0, 1 oder 2 Alkylgruppen am Siliziumatom enthalten sein, insbesondere Methyl-, Ethyl-, Propyl- oder Butylgruppen. Insbesondere sind Tri- oder Dialkoxysilane mit Methoxy-, Ethoxy-, Propoxy- oder Butoxygruppen geeignet.

Beispiele für mercaptofunktionelle Silane sind 3-Mercaptopropyltrimethoxysilan, 3-Mercaptopropyltrimethoxysilan oder die entsprechenden Alkyldimethoxy- oder Alkyldiethoxy-Verbindungen. Beispiele für aminofunktionelle Silane sind 3-Aminopropyltrimethoxysilan (AMMO), 3-Aminopropyltriethoxysilan (AMEO), 3-Aminopropylmethyldimethoxysilan, 3-Aminopropylmethyldiethoxysilan, N-(2-Aminoethyl)-3-aminopropyltrimethoxysilan (DAMO), N-(2-Aminoethyl)-3-aminopropyltriethoxysilan, N-(2-Aminoethyl)-3-aminopropylmethyldimethoxysilan, N-(2-Aminoethyl)-3-aminopropylmethyldiethoxysilan, N,N-Di(2-Aminoethyl)-3-aminopropyltrimethoxysilan, N,N-Di(2-Aminoethyl)-3-aminopropyltriethoxysilan, N,N-Di(2-Aminoethyl)-3-aminopropylmethyldimethoxysilan, N,N-Di(2-Aminoethyl)-3-aminopropylmethyldiethoxysilan, N-(2-Aminoethyl)-N'-(2-aminoethyl)-3-amino propyltrimethoxysilan, N-(2-Aminoethyl)-N'-(2-aminoethyl)-3-aminopropyltriethoxy silan, N-(2-Aminoethyl)-N'-(2-aminoethyl)-3-aminopropylmethyldimethoxysilan, N-(2-Aminoethyl)-N'-(2-aminoethyl)-3-aminopropylmethyldiethoxysilan, Bis-(Triethoxy silylpropyl)-amin, Bis-(Trimethoxysilylpropyl)-amin, N-(2-Aminobutyl)-3-aminopropyltriethoxysilan, N-(2-Aminobutyl)-3-aminopropyltrimethoxysilan, N-(n-Butyl)-3-aminopropyltrimethoxysilan, N-(n-Butyl)-3-aminopropyltriethoxysilan, N-(n-Butyl)-3-aminopropylalkoxydiethoxysilan, 3-Glycidyloxymethyltrimethoxysilan, 3-Glycidyloxymethyltriethoxysilan, 2-Glycidoxyethyltrimethoxysilan, oder Mischungen daraus sowie entsprechende Verbindungen, die anstelle der jeweiligen Propylgruppe eine andere Alkylgruppe tragen. Eine bevorzugte Ausführungsform setzt zur Umsetzung mit den Isocyanatprepolymeren Aminosilane ein, insbesondere α-funktionalisierte Silane, besonders bevorzugt α-Aminosilane. Es können auch Gemische mehrerer Silane eingesetzt werden.

Die Menge der umzusetzenden Silanverbindungen wird so ausgewählt, dass alle Isocyanatgruppen des Prepolymeren mit einer nucleophilen Gruppe der Silanverbindung reagiert haben. Es ist möglich, dass ein geringer Überschuss an nucleophilen Silanen eingesetzt wird. So kann sichergestellt werden, dass keine freien Isocyanatgruppen in den Silan-terminierten Prepolymeren vorhanden sind. Ein zu großer Überschuss an Silanen soll vermieden werden, um den Gehalt an niedermolekularen Aminoverbindungen gering zu halten.

Eine andere Ausführungsform der Erfindung setzt die oben als Polymerrückgrat beschriebenen OH-funktionellen Polyester und/oder Polyether mit Silanen um, gemäß der oben angegebenen Formel mit der Maßgabe, dass Nu eine Isocyanatgruppe ist. Dabei enthält die Verbindung dann hydrolysierbare Gruppen und eine Isocyanatgruppe. Beispiele für solche Silane sind Trimethoxysilylpropylisocyanat, Trimethoxysilylpentylisocyanat, Trimethoxysilylbuthylisocyanat oder die entsprechenden Triethyoxy oder Tripropoxyverbindungen. Ebenfalls sind die entsprechenden Dialkoxyalkylsilyl-Isocyanatverbindungen geeignet.

Die Menge der Isocyanato-Silanverbindungen wird so gewählt, dass die molare Menge der Isocyanatgruppen der molaren Menge der OH-Gruppen des hydroxyfunktionellen Polyols entspricht. Es werden in diesem Fall ebenso Silanfunktionelle Prepolymere erhalten.
Eine weitere Ausführungsform wählt als Polymerrückgrat die oben angegebenen Polymere so aus, dass diese funktionelle Gruppen enthalten, die mit Silanverbindungen reagieren können, die zusätzlich noch eine Epoxygruppe oder eine Anhydridgruppe aufweisen. Dabei werden die Polymere, insbesondere die Polyole, dann über Estergruppen oder über Glycidylether mit den hydrolysierbaren Silangruppen verknüpft.

Erfindungsgemäß geeignete Prepolymere müssen vernetzbare Silangruppen aufweisen. Die Anzahl der hydrolysierbaren Silangruppen pro Molekül soll mindestens zwei und mehr betragen. In einer besonderen Ausführungsform sind die Silangruppen endständig zu der Polymerkette. Die Prepolymere sollen bevorzugt frei von NCO-Gruppen sein.

Die erfindungsgemäßen geeigneten Umsetzungsprodukte sind Prepolymere, die Silangruppen enthalten. Diese Prepolymere weisen meist mindestens zwei, bevorzugt mehrere Urethangruppen auf. Die Glasübergangstemperatur der Umsetzungsprodukte in Lösemittelfreier Form soll zwischen -40 bis 0°C betragen, insbesondere zwischen -35°C bis -10°C (gemessen mit DSC). Die Glasübergangstemperatur kann durch die Menge der aromatischen Anteile von Polymerrückgrat oder Isocyanat beeinflusst werden. Es hat sich gezeigt, dass Silan-reaktive Prepolymere besonders geeignet sind, die auf Basis von aromatischen Isocyanaten hergestellt wurden. Beispiele dafür sind TDI, NDI, 4,4-MDI, 2,4-MDI, mXDI oder TMXDI.

Aus den oben beschriebenen Silan-funktionalisierten Prepolymeren können Kaschierklebstoffe formuliert werden. Es ist möglich, dass in diesen Kaschierklebstoffen zusätzliche Bestandteile enthalten sind, wie beispielsweise Lösemittel, Weichmacher, Katalysatoren, Stabilisatoren, Haftvermittler, auch in einer weniger bevorzugten Ausführungsform, Pigmente und Füllstoffe.

Als Weichmacher können beispielsweise medizinische Weißöle, naphtenische Mineralöle, paraffinischen Kohlenwasserstofföle, Polypropylen-, Polybuten-, Polyisopren-Oligomere, hydrierte Polyisopren- und/oder Polybutadien-Oligomere, Phthalate, Adipate, Benzoatester, pflanzliche oder tierische Öle und deren Derivate eingesetzt werden. Als einsetzbaren Stabilisatoren oder Antioxidantien können Phenole, sterisch gehinderte Phenole hohen Molekulargewichts, polyfunktionelle Phenole, schwefel- und phosphorhaltige Phenole oder Amine ausgewählt werden. Ein erfindungsgemäßer Klebstoff kann auch Pigmente oder Füllstoffe enthalten. Die Mengen sollen von 0 bis 5 Gew.-% betragen. Der Klebstoff soll bevorzugt transparent sein. Deswegen sind insbesondere nano-skalige Füllstoffe geeignet. Es könne auch Füllstoffe ausgewählt werden, die in dem Klebstoff einen geeigneten Brechungsindex aufweisen, sodass ein transparenter oder nur leicht trüber Klebstoff erhalten wird.

Es ist möglich, dem Klebstoff zusätzlich Silanverbindungen als Haftvermitteler zuzusetzen. Als Haftvermittler können die oben angeführten Silane oder vorzugsweise organofunktionelle Silane wie (meth)acryloxyfunktionelle, epoxyfunktionelle oder nicht reaktiv substituierte Silane eingesetzt werden. In einer bevorzugten Ausführungsform werden dem Klebstoff 0,1 bis 3 Gew.-% solcher Silane zugesetzt. Beispiele dafür sind 3-Acryloxypropyltrialkoxysilan oder 3-Methacryloxy propyltrialkoxysilan; epoxyfunktionelle Silane, wie 3-Glycidyloxymethyltrimethoxysilan, 3-Glycidyloxymethyltriethoxysilan, 2-Glycidoxyethyltrimethoxysilan; Vinyltrimethoxysilan, Alkyltriethoysilan oder entsprechende Di oder Tri-alkoxyderivate. Diese können gegebenenfalls in das Polymernetzwerk eingebaut werden.

Als gegebenenfalls zusätzlich vorhandenes Additiv kann ein erfindungsgemäß geeigneter Klebstoff auch Katalysatoren enthalten. Als Katalysatoren können alle bekannten Verbindungen eingesetzt werden, die die hydrolytische Spaltung der hydrolysierbaren Gruppen der Silangruppierungen sowie die anschließende Kondensation der Si-OH-Gruppe zu Siloxangruppierungen katalysieren können. Beispiele hierfür sind Titanate, wie Tetrabutyltitanat oder Titantetraacetylacetonat; Wismutverbindungen, wie Bismut-tris-2-ethylhexanoat; Zinncarboxylate, wie Dibutylzinndilaurat (DBTL), Dibutylzinndiacetat oder Dibutylzinndiethylhexanoat, Zinnoxide wie Dibutylzinnoxid und Dioctylzinnoxid; Organoaluminumverbindungen wie Aluminumtrisacetylacetonat; Chelatverbindungen wie Zirconumtetraacetylacetonat; Aminverbindungen oder ihre Salze mit Carbonsäuren, wie Octylamin, Cyclohexylamin, Benzylamin, Dibutylamin, Monoethanolamin, Di- oder Triethanolamin, Triethylamin, Tripropylamin Tributylamin, Diethanolamin, Dipropylamin, Dibutylamin, Diethylentriamin, Triethylentetramin, Triethylendiamin, Guanidin, Morpholin, N-methylmorpholin und 1,8-Diazabicyclo-(5,4,0)-undecen-7 (DBU), Silanverbindungen mit Aminogruppen. Der Katalysator oder Mischungen werden in einer Menge von 0,01 bis etwa 5 Gew.-% bezogen auf das Gesamtgewicht der Zubereitung eingesetzt. Bevorzugt sind 0,05 bis 4 Gew.-%, besonders bevorzugt von 0,2 bis 3 Gew.-% Katalysator. Es ist bevorzugt wenn der Klebstoff keine Zinn-Katalysatoren enthält. Insbesondere können auch andere Schwermetall-haltige Katalysatoren vermieden werden. In einer besonderen Ausführungsform enthält ein erfindungsgemäßer Klebstoff flüchtige Amine, insbesondere solche, die bei Temperaturen bis zu 45 °C verdampfen können.

Erfindungsgemäß enthalten die Klebstoffe auch Lösemittel. Es handelt sich dabei um die üblichen Lösemittel, die bei Temperaturen bis zu 130°C verdampfen können, insbesondere mit einem Siedepunkt unterhalb 100°C. Die Lösemittel können ausgewählt aus der Gruppe der aliphatischen Kohlenwasserstoffe, aromatische Kohlenwasserstoffe, Ketone, Alkohole. Insbesondere sollen Alkohole zumindest anteilig enthaltend sein. Es kann sich beispielsweise um die bekannten C₁ bis C₆-Monoalkohole handeln. Eine bevorzugte Ausführungsform enthält Propanol und/oder Ethanol als Lösemittel. Die Lösemittel dienen zur Absenkung und Einstellung der Viskosität. Der Anteil der Lösemittel kann in weiten Grenzen variieren, beispielsweise von 20 bis 75 % bezogen auf den Klebstoff. Dabei ist es bekannt, den Klebstoff in einer Lieferform hochviskos einzustellen, er kann dann vor der Applikation mit weiterem Lösemittel auf eine geeignete Viskosität verdünnt werden. Dabei ist es möglich, dass Alkohole schon bei Herstellung zugesetzt werden oder erst später vor der Applikation. Insbesondere ist es möglich, dass der erfindungsgemäße Klebstoff bis zu 66 % bezogen auf die Summe der Lösemittel der oben genannten Alkohole enthält. Es hat sich als zweckmäßig gezeigt, wenn der erfindungsgemäße Klebstoff mindestens 5 Gew.% Alkohol enthält.

Die erfindungsgemäß eingesetzten Lösemittel müssen nicht wasserfrei sein. Es ist bekannt, dass bei Isocyanathaltigen Klebstoffen die Bestandteile und auch die Lösemittel wasserfrei sein müssen, um eine vorzeitige Reaktion mit den Isocyanatgruppen zu verhindern. Bei der erfindungsgemäßen Zusammensetzung hat sich aber gezeigt, dass die Klebstoffe bis zu 8 % Wasser enthalten können. Bevorzugt soll die Wassermenge zwischen 0,1 bis 5 Gew.-% betragen, insbesondere über 0,3 Gew.-%. Die Menge des Wassers ist so zu wählen, dass weiterhin eine homogene Klebstofflösung erhalten bleibt. Es soll keine Phasentrennung auftreten.

Die Viskosität der Kaschierklebstoffe soll bei Auftragstemperatur gering sein. Diese kann bis 45°C betragen, insbesondere bis 35°C. Die Viskosität der geeigneten Kaschierklebstoffe soll zwischen 50 bis 20000 mPas gemessen bei 15 bis 45°C betragen, bevorzugt 100 bis 5000 mPas, (gemessen nach Brookfield, gemäß ISO 2555). Zur Applikation wird der Klebstoff meistens mit Lösemittel verdünnt. Dabei kann die Viskosität von ca. 50 m Pas bis zu 800 mPas (bei 20 bis 48°C) betragen. Anwendungstechnische Messungen sollen zwischen 12 bis 28 Sekunden (Ford cup. 4 mm, ASTM D 1200) betragen. Der Festkörper in der Applikationsform liegt bevorzugt zwischen 15 bis 60 %, besonders bevorzugt 30 bis 50 Gew.-%. Da eine schnelle Weiterverarbeitung notwendig ist, sollen die Klebstoffe rasch vernetzen und eine ausreichende Kohäsion und Adhäsion aufbauen. Erfindungsgemäß ist eine Vernetzung des aufgetragenen Klebstoffs auch bei nur einer geringen Feuchtigkeit der zu verklebenden Substrate möglich. Das wird durch den Anteil an Wasser im Klebstoff unterstützt.

Die erfindungsgemäßen Klebstoffe sind lagerstabil. Sie können ohne vorzeitige Vernetzung über längere Zeit gelagert werden, auch in einer Wasser-haltigen Form. Es ist üblich, eine lösemittelarme Form zu lagern. Diese kann dabei eine höhere Viskosität aufweisen. In einer Ausführungsform ist es möglich, diese lösemittelreduzierten Kaschierklebstoffe für die Applikation zu erwärmen und danach aufzutragen. In einer anderen Ausführungsform wird der Klebstoff bei der Anwendung auf eine niedrige Viskosität mit Lösemitteln verdünnt und dann aufgetragen. Ein weiterer Gegenstand der Erfindung ist die Verwendung der erfindungsgemäßen vernetzbaren Silanfunktionalisierten Klebstoffe zur Herstellung von Mehrschichtfolien. Als Folienmaterialien zum Herstellen von Mehrschichtfolien können die bekannten flexiblen Folien eingesetzt werden, wie Polymerfolien, Papierfolien, Metallfolien oder oberflächenbehandelte Folien. Es handelt sich dabei um Substrate aus thermoplastischen Kunststoffen in Folienform, beispielsweise Polyolefine, wie Polyethylen (PE) oder Polypropylen (PP, CPP, OPP), Polyvinylchlorid (PVC), Polystyrol (PS), Polyestern, wie PET, Polyamid, organische Polymere, wie Cellophan, es sind auch Metallfolien oder Papier als Substrate möglich. Dabei können die Folienmaterialen auch modifiziert sein, z.B. durch Modifizieren der Polymere mit funktionellen Gruppen, durch Metall- oder Oxidbeschichtungen, oder es können zusätzliche Komponenten, beispielsweise Pigmente, Farbstoffe, oder geschäumte Schichten in der Folie enthalten sein. Es kann sich um gefärbte, bedruckte, farblose oder transparente Folien handeln.

Bei der erfindungsgemäßen Verwendung werden zwei oder mehrere, gleiche oder insbesondere unterschiedliche Folien mit einem erfindungsgemäß geeigneten 1 K-Klebstoff miteinander verklebt. Dabei kann bei einer Ausführungsform der Erfindung eine Folie vor Auftrag des Kaschierklebstoffs bereits farbig bedruckt sein. Auf die gegebenenfalls vorbehandelte Folie wird dann ein erfindungsgemäßer flüssiger Kaschierklebstoff aufgetragen. Das kann durch an sich bekannte Druckverfahren, z. B. mit Rasterwalzen, Glattwalzen, erfolgen, der Klebstoff wird über Düsen aufgesprüht oder es wird der Klebstoff über Schlitzdüsen aufgetragen. Das Auftragsverfahren ist in Abhängigkeit von der Viskosität des Klebstoffs auszuwählen.

Durch die Auswahl der erfindungsgemäßen vernetzbaren 1 K-Kaschierklebstoffe ist es möglich, eine niedrige Applikationsviskosität zu erhalten. Dabei weist der erfindungsgemäß geeignete Klebstoff eine niedrige Viskosität auf, deswegen ist ein Auftrag in dünner Schichtstärke von 1 bis 25 µm, insbesondere von 2 bis 15 µm möglich.

Die Herstellung der Mehrschichtfolie erfolgt durch Zusammenfügen einer mit dem Klebstoff beschichteten Folie und einer zweiten Folie. Ein verkleben von zwei beschichteten Folien ist möglich, aber weniger bevorzugt. Das Verkleben kann unter Druck und erhöhter Temperatur erfolgen. Gegebenenfalls können auch mehrere Folien miteinander verklebt werden. Solche Kaschierverfahren sind dem Fachmann bekannt.

Der erfindungsgemäße Klebstoff kann insbesondere als Kaschierklebstoff eingesetzt werden. Dabei werden die Klebstoffe in dünner Schicht auf eine Folie aufgetragen. Unmittelbar danach verdampfen die enthaltenen Lösemittel, danach wird eine zweite Folie auf die Klebstoffschicht aufgebracht und mit Druck verpresst. Durch die erfindungsgemäße Zusammensetzung ist es möglich, niedermolekulare Alkohole als Lösemittel einzusetzen, beispielsweise Methanol, Ethanol oder Propanol, diese sind lebensmittelrechtlich weniger bedenklich ist als andere Lösemittel. Durch die erfindungsgemäße Arbeitsweise können dadurch andere Lösemittel reduziert und vermieden werden.

Durch die Auswahl der bevorzugten Vernetzung über Alkoxysilan-Gruppen ist es möglich, dass der Klebstoff schnell vernetzt. Dabei entstehen durch die Reaktion keine Blasen, die bei Klebstoffen auf Isocyanat-Basis bei hochreaktiven Systemen nicht zu vermeiden sind. Die erfindungsgemäßen Klebstoffe haben den Vorteil, dass die notwendigen Lösemittel nicht getrocknet werden müssen. Damit wird Herstellung, Lagerung und Applikationsverfahren der erfindungsgemäßen Klebstoffe vereinfacht. Ein weiterer Vorteil des erfindungsgemäßen Kaschierklebstoffs ist die gute Flexibilität. Es hat sich gezeigt, dass der erfindungsgemäße Klebstoff eine vorbestimmte T_{g} aufweist. Diese soll nach der Vernetzung zu einer verklebten, flexiblen Mehrschichtfolie führen.
Dabei soll die Tg des vernetzten Klebstoffs zwischen -15 bis +30°C betragen, insbesondere zwischen -10 bis +20°C. Als lösemittelfreier vernetzter Zustand soll eine Probe des vollständigen Klebstoffs von weniger als 0,5 g angesehen werden, die mit einer Heizrate von 10 K pro Minute von 0 auf 200°C geheizt wurde. Danach kann die T_{g} des vernetzten Materials mittels DSC bestimmt werden. Ebenfalls Gegenstand der Erfindung ist eine Mehrschichtfolie, die mit einem erfindungsgemäß geeigneten Kaschierklebstoff verklebt ist, dabei können als Substrate die bekannten Kunststofffolien eingesetzt werden, beispielsweise von Polypropylen, Polyethylen, Polyester, PVC, Polyamid oder andere. Auf diese Folie wird mit einem erfindungsgemäßen Klebstoff eine kontinuierliche Schicht erzeugt, die unmittelbar nach dem Auftragen mit einer zweiten gleichen oder unterschiedlichen Folie verklebt wird. Zusätzlich zu den Zweischichtfolien ist es ebenso möglich, mit weiteren Arbeitsschritten eine Mehrschichtfolie zu erzeugen. Eine erfindungsgemäße Ausführungsform verklebt durchsichtige Folien, dafür ist es zweckmäßig wenn der erfindungsgemäße Klebstoff ebenfalls durchsichtig und nicht verfärbt ist.

Es können in diesen Mehrschichtfolien auch andere Schichten enthalten sein, beispielsweise aus Papier, Metallfilmen oder andere Barriereschichten. Diese Mehrschichtfolien können nach der Verklebung rasch weiterverarbeitet werden, da eine hohe Anfangshaftung und eine schnelle Vernetzung gegeben ist. Eine aufwendige Lagerung, um Vernetzung oder Nebenreaktion abzuwarten, kann entfallen.

Der erfindungsgemäße Klebstoff zeigt eine gute Haftung zwischen den unterschiedlichen Schichten. Er ist nach Vernetzung insbesondere transparent, d. h. farblos und durchsichtig beispielsweise in Schichtdicken von bis zu 0,5mm. Er zeigt keine Blasen oder Fehlstellen in der Klebstoffschicht. Deswegen ist er speziell als Kaschierklebstoff zum Verkleben von flexiblen folienförmigen Substraten geeignet.

### Beispiele

### Beispiel Polyester 1:

Es wird ein Polyester aus Adipinsäure und Isophthalsäure zusammen mit Ethylenglykol hergestellt.
Der Polyester hat ein Molekulargewicht von ca. 2000 g/mol . Die OH-Zahl beträgt ca. 58, die Säurezahl ist kleiner 2. Die T_{g} beträgt ca. -30°C.

### Beispiel Polyester 2:

Es wird ein Polyester aus Adipinsäure, Isophthalsäure, Azelainsäure und Phthalsäure zusammen mit Diethylenglykol, Ethylenglykol, Propylenglykol und Neopentylglycol hergestellt.
Der Polyester weist ein Molekulargewicht von 5100 g/mol auf. Die OH-Zahl des Polyesters beträgt ca. 22. Die Tg beträgt ca. -24°C.

### Beispiel Polyester 3:

Es wird ein Polyester aus Sebacinsäure und Isophthalsäure zusammen mit Neopentylglykol hergestellt.
Der Polyester hat ein Molekulargewicht von ca. 2000 g/mol . Die OH-Zahl beträgt ca. 60, die Säurezahl ist kleiner 2.

### Beispiel 4:

57 Teile des Polyesters 3 werden in 33 Teile Ethylacetat gelöst und danach mit 6,5 Teilen TDI umgesetzt. Danach werden 3,0 Teile Bis(3-triethoxysilylpropyl) amin zugesetzt.
Der entstehende Klebstoff hat ein Festkörper von 65 %.. Die Viskosität beträgt 5400 mPas (20°C ). Ein vernetzter Probekörper aus dem Klebstoff weist eine Glasübergangstemperatur von 1 °C auf.

### Beispiel 5

51,5 Teile des Polyesters 1 werden in 38,5 Teile Ethylacetat gelöst und danach mit 6 Teilen TDI 80 umgesetzt. Danach werden 4,3 Teile Bis(3-triethoxysilylpropyl)amine zugesetzt.
Das entstehende Produkt weist ein Festkörper von 62 % auf. Es enthält keine weiteren Isocyanatgruppen. Die Viskosität beträgt ca. 1400 mPas (20 °C). Die T_{g} (vernetzt) beträgt -2°C.

### Beispiel 6

63,0 Teile des Polyesters 2 werden in 30,0 Teile Ethylacetat gelöst und danach mit 3,45 Teilen TDI 100 sowie 4,15len Bis(3-triethoxysilylpropyl) amin umgesetzt. Das entstehende Produkt weist ein Festkörper von 70 % auf. Es enthält keine weiteren Isocyanatgruppen. Die Viskosität beträgt ca. 7750 mPas (20 °C).
Die T_{g} (vernetzt) beträgt +4°C.

### Beispiel 7

61,2 Teile des Polyesters 2 werden in 34,5 Teile Ethylacetat gelöst und danach mit 5,0 Teilen TDI 100 sowie 1,4 Teilen N-Cyclohexylaminomethylmethyldiethoxysilan umgesetzt. Das entstehende Produkt weist ein Festkörper von 65 % auf. Es enthält keine weiteren Isocyanatgruppen. Die Viskosität beträgt ca. 6700 mPas (20 °C).

### Verklebung:

Die Klebstoffe werden mit 20 Teilen EtOH ( 5% Wasser) verdünnt.
Dabei beträgt die Viskosität unter 800 mPas (20°C). Es werden Folien auf Basis von PE mit einem Rakel mit den erfindungsgemäßen Klebstoffen der Beispiele 4 bis 7 beschichtet. Die Schichtstärke beträgt 5 µm. Eine andere Folie wird analog mit einer Schichtstärke von 10 µm beschichtet. Die beschichtete Oberfläche wird ca. 1 min. zum Ablüften bei 30°C gebracht. Danach wird auf die jeweils beschichtete Folie eine zweite Folie auf Basis OPP mit einer Walze aufgequetscht.
Nach 12 Stunden wird die Verklebung der beiden Foliensubstrate bestimmt. Es ist in allen Fällen eine gute Haftung miteinander festzustellen.

## Patentansprüche

1. Vernetzbarer 1-Komponenten-Kaschierklebstoff enthaltend
a) 25 bis 80 Gew- % mindestens eines Polyesterprepolymeren, Polyetherprepolymeren oder Polyurethanprepolymeren, das mindestens zwei vernetzbare Silangruppe aufweist,
b) 75 bis 20 Gew-% organische Lösemittel mit einem Siedepunkt bis 130°C,
c) 0 bis 15 Gew- % Additive,
wobei das Prepolymer ein Molekulargewicht von 2000 bis 30000 g/mol beisitzt, wobei die Viskosität des Klebstoffs zwischen 50 bis 20000 mPas (nach DIN ISO 2555) beträgt, gemessen bei 15 bis 45°C, und wobei der vernetzte Klebstoff eine Glasübergangstemperatur von -15 bis 30°C (gemessen mittels DSC) aufweist.

2. 1-K-Klebstoff nach Anspruch 1, **dadurch gekennzeichnet, dass** mindestens ein Polyesterprepolymer oder Polyurethanprepolymer eingesetzt wird, hergestellt aus Polyesterpolyolen enthaltend mindestens zwei OH-Gruppen mit einem Molekulargewicht von 400 bis 20000 g/mol.

3. 1-K-Klebstoff nach Anspruch 2, **dadurch gekennzeichnet, dass** das Polyesterprepolymer hergestellt wird aus Polyesterpolyolen umgesetzt mit einem molaren Überschuss an Diisocyanaten zu NCO-Polyesterprepolymeren, mit anschließender Umsetzung aller NCO-Gruppen des NCO- Prepolymeren mit nucleophil substituierten Alkyl-Alkoxysilanen.

4. 1-K-Klebstoff nach Anspruch 2, **dadurch gekennzeichnet, dass** das Prepolymer hergestellt wird aus Polyesterpolyolen umgesetzt mit NCO-substituierten Alkyl-Alkoxysilanen.

5. 1-K-Klebstoff nach einem der Ansprüche 1 bis 4, **dadurch gekennzeichnet, dass** ein Polyetherprepolymer eingesetzt wird, hergestellt aus Polyetherpolyolen, Umsetzung mit Diisocyanaten zu einem NCO-haltigen Prepolymer und anschließender Umsetzung mit nucleophil substituierten Alkyl-Alkoxysilanen anteilig oder ausschließlich enthalten ist.

6. 1-K-Klebstoff nach einem der Ansprüche 1 bis 5, **dadurch gekennzeichnet, dass** der Klebstoff mindestens 50 %, bezogen auf die Menge der Prepolymere, Prepolymere auf Basis von Polyesterpolyolen enthält.

7. 1-K-Klebstoff nach einem der Ansprüche 1 bis 6, **dadurch gekennzeichnet, dass** bei der Herstellung der Prepolymere Aminosilane eingesetzt werden, insbesondere alpha-Aminosilane.

8. 1-K-Klebstoff nach einem der vorhergehenden Ansprüche, **dadurch gekennzeichnet, dass** das Prepolymere Trialkoxysilangruppen enthält, insbesondere Triethoxysilangruppen.

9. 1-K-Klebstoff nach einem der vorhergehenden Ansprüche, **dadurch gekennzeichnet, dass** der Klebstoff bis zu 50 Gew-% , bezogen auf den Klebstoff, Alkohole und/oder 0,1 bis 8 Gew.% Wasser enthält.

10. 1-K-Klebstoff nach einem der vorhergehenden Ansprüche, **dadurch gekennzeichnet, dass** die Additive ausgewählt werden aus Katalysatoren, Stabilisatoren, Haftvermittlern, Pigmenten oder Füllstoffen.

11. 1-K-Klebstoff nach einem der vorhergehenden Ansprüche, **dadurch gekennzeichnet, dass** der Klebstoff frei von Zinn-Katalysatoren ist, insbesondere frei von Schwermetallkatalysatoren.

12. 1-K-Klebstoff nach einem der vorhergehenden Ansprüche, **dadurch gekennzeichnet, dass** der Klebstoff flüchtige Amine enthält.

13. Verwendung von 1-K-Klebstoffen nach einem der Ansprüche 1 bis 12 zum Verkleben von flexiblen folienförmigen Substraten.

14. Verwendung nach Anspruch 13, **dadurch gekennzeichnet, dass** als Foliensubstrate Polymerfolien, Papierfolien, Metallfolien sowie oberflächenbehandelte Folien verklebt werden, insbesondere zur Herstellung von Mehrschichtfolien in der Verpackungsindustrie.

## Claims

1. A crosslinkable one-component lamination adhesive containing
a) 25 to 80 wt% of at least one polyester prepolymer, polyether prepolymer, or polyurethane prepolymer that comprises at least two crosslinkable silane groups,
b) 75 to 20 wt% organic solvent having a boiling point of up to 130°C,
c) 0 to 15 wt% additives,
the prepolymer possessing a molecular weight from 2000 to 30,000 g/mol, the viscosity of the adhesive being equal to between 50 and 20,000 mPas (per DIN ISO 2555) measured at 15 to 45°C, and the crosslinked adhesive having a glass transition temperature from -15 to 30°C (measured by DSC).

2. The one-component adhesive according to Claim 1, **characterized in that** at least one polyester prepolymer or polyurethane prepolymer is used, manufactured from polyester polyols containing at least two OH groups having a molecular weight from 400 to 20,000 g/mol.

3. The one-component adhesive according to Claim 2, **characterized in that** the polyester prepolymer is manufactured from polyester polyols reacted with a molar excess of diisocyanates to yield NCO-polyester prepolymers, with subsequent reaction of all NCO groups of the NCO prepolymers with nucleophilically substituted alkyl alkoxy silanes.

4. The one-component adhesive according to Claim 2, **characterized in that** the prepolymer is manufactured from polyester polyols reacted with NCO-substituted alkyl alkoxy silanes.

5. The one-component adhesive according to one of Claims 1 to 4, **characterized in that** a polyether prepolymer, manufactured from polyether polyols, reaction with diisocyanates to yield an NCO-containing prepolymer, and subsequent reaction with nucleophilically substituted alkyl alkoxy silanes, is contained in part or exclusively.

6. The one-component adhesive according to one of Claims 1 to 5, **characterized in that** the adhesive contains at least 50% prepolymers on the basis of polyester polyols, based on the quantity of prepolymers.

7. The one-component adhesive according to one of Claims 1 to 6, **characterized in that** aminosilanes, in particular alpha-aminosilanes, are used in the manufacture of the prepolymers.

8. The one-component adhesive according to one of the preceding claims, **characterized in that** the prepolymer contains trialkoxysilane groups, in particular triethoxysilane groups.

9. The one-component adhesive according to one of the preceding claims, **characterized in that** the adhesive contains up to 50 wt% alcohols and/or 0.1 to 8 wt% water, based on the adhesive.

10. The one-component adhesive according to one of the preceding claims, **characterized in that** the additives are selected from catalysts, stabilizers, adhesion promoters, pigments, or fillers.

11. The one-component adhesive according to one of the preceding claims, **characterized in that** the adhesive is free of tin catalysts, in particular free of heavy-metal catalysts.

12. The one-component adhesive according to one of the preceding claims, **characterized in that** the adhesive contains volatile amines.

13. Use of one-component adhesives according to one of Claims 1 to 12 for adhesive bonding of flexible film-type substrates.

14. The use according to Claim 13, **characterized in that** polymer films, paper films, metal foils, and surface-treated films are adhesively bonded as film substrates, in particular for the manufacture of multi-layer films in the packaging industry.

## Revendications

1. Adhésif de contrecollage réticulable à un seul composant contenant :
a) de 25 à 80 % en poids d'au moins un prépolymère de polyester, un prépolymère de polyéther ou un prépolymère de polyuréthane, qui présente au moins deux groupes silane réticulables ;
b) de 75 à 20 % en poids d'un solvant organique dont le point d'ébullition s'élève jusqu'à 130 °C ;
c) de 0 à 15 % en poids d'additifs ;
le prépolymère possédant un poids moléculaire de 2.000 à 30.000 g/mol, la viscosité de l'adhésif se situant entre 50 et 20.000 mPa.s (selon la norme DIN ISO 2555), mesurée à une température de 15 à 45 °C, et l'adhésif réticulé présentant une température de transition vitreuse de -15 à 30 °C (mesurée par DSC).

2. Adhésif à un seul composant selon la revendication 1, **caractérisé en ce qu'**on met en oeuvre au moins un prépolymère de polyester ou un prépolymère de polyuréthane, que l'on obtient à partir de polyesterpolyols contenant au moins deux groupes OH possédant un poids moléculaire de 400 à 20.000 g/mol.

3. Adhésif à un seul composant selon la revendication 2, **caractérisé en ce qu'**on prépare le prépolymère de polyester à partir de polyesterpolyols que l'on a fait réagir avec un excès molaire de diisocyanates pour obtenir des prépolymères de polyester contenant des groupes NCO, avec mise en réaction ultérieure de tous les groupes NCO du prépolymère contenant des groupes NCO avec des alkyl-alcoxysilanes à substitution nucléophile.

4. Adhésif à un seul composant selon la revendication 2, **caractérisé en ce qu'**on prépare le prépolymère à partir de polyesterpolyols que l'on a fait réagir avec des alkyl-alcoxysilanes substitués avec des groupes NCO.

5. Adhésif à un seul composant selon l'une quelconque des revendications 1 à 4, **caractérisé en ce qu'**on met en oeuvre un prépolymère de polyéther, obtenu à partir de polyétherpolyols, par mise en réaction avec des diisocyanates pour obtenir un prépolymère contenant des groupes NCO et mise en réaction ultérieure avec des alkyl-alcoxysilanes à substitution nucléophile, qu'il contient en partie ou à titre exclusif.

6. Adhésif à un seul composant selon l'une quelconque des revendications 1 à 5, **caractérisé en ce que** l'adhésif contient au moins 50 %, rapportés à la quantité des prépolymères, de prépolymères à base de polyesterpolyols.

7. Adhésif à un seul composant selon l'une quelconque des revendications 1 à 6, **caractérisé en ce que**, lors de la préparation des prépolymères, on met en oeuvre des aminosilanes, en particulier des α-aminosilanes.

8. Adhésif à un seul composant selon l'une quelconque des revendications précédentes, **caractérisé en ce que** le prépolymère contient des groupes de trialcoxysilane, en particulier des groupes de triéthoxysilane.

9. Adhésif à un seul composant selon l'une quelconque des revendications précédentes, **caractérisé en ce que** l'adhésif contient des alcools jusqu'à concurrence de 50 % en poids, rapportés à l'adhésif et/ou de l'eau à concurrence de 0,1 à 8 % en poids.

10. Adhésif à un seul composant selon l'une quelconque des revendications précédentes, **caractérisé en ce que** les adhésifs sont choisis parmi des catalyseurs, des stabilisateurs, des promoteurs de l'adhérence, des pigments ou des matières de charge.

11. Adhésif à un seul composant selon l'une quelconque des revendications précédentes, **caractérisé en ce que** l'adhésif est exempt de catalyseurs à base d'étain, en particulier exempt de catalyseur à base de métaux lourds.

12. Adhésif à un seul composant selon l'une quelconque des revendications précédentes, **caractérisé en ce que** l'adhésif contient des amines volatiles.

13. Utilisation d'adhésifs à un seul composant selon l'une quelconque des revendications 1 à 12, pour le collage de substrats flexibles en forme de feuilles.

14. Utilisation selon la revendication 13, **caractérisée en ce qu'**on colle, à titre de substrats en forme de feuilles, des feuilles polymères, des feuilles de papier, des feuilles métalliques ainsi que des feuilles traitées en surface, en particulier pour la fabrication de feuilles multicouches dans l'industrie de l'emballage.
